# EUROPEAN PATENT APPLICATION

(11) **EP 3 483 545 A1**
(43) Date of publication of application: **15.05.2019**
(21) Application number: 18204897.5
(22) Date of filing: 07.11.2018
(51) Int. Cl.: F28F 1/40

(54) **HEAT CHANGE TUBE FOR THE END PRODUCT OF AIR CONDITIONING SYSTEM AND MANUFACTURING METHOD THEREOF**

(30) Priority: 08.11.2017 CN 201711091264
(71) Applicant: Carrier Corporation, Palm Beach Gardens, FL 33418 (US)
(72) Inventor: CHIANG, Robert Hong-Leung, Shanghai, 201206 (CN); WU, Xiaowei, Shanghai, 201400 (CN); ZHAO, LingXiao, Shanghai, 201206 (CN); JIANG, XiuHong, Shanghai, 201400 (CN); WU, Zhigang, Shanghai, 201400 (CN)
(74) Representative: Schmitt-Nilson Schraud Waibel Wohlfrom Patentanwälte Partnerschaft mbB

(57) **Abstract**

The present invention relates to a heat exchange tube for a terminal product of an air-conditioning system. Air and a refrigerating medium perform heat exchange through the heat exchange tube, and protrusions are disposed on an inner wall of the heat exchange tube. The present invention further relates to an air-conditioning terminal product provided with the heat exchange tube, an air-conditioning system provided with the air-conditioning terminal product, and a method of manufacturing a heat exchange tube for a terminal product of an air-conditioning system. The heat exchange tube for a terminal product of an air-conditioning system according to the present invention is advantageous in a small volume, high heat-exchange efficiency, low manufacturing costs, and the like.

## Description

### Technical Field

The present invention relates to a heat exchange tube for a terminal product of an air-conditioning system, and in particular, to an air-conditioning terminal product, an air-conditioning system, and a method of manufacturing a heat exchange tube for a terminal product of an air-conditioning system.

### Background Art

Shell-and-tube heat exchangers are heat exchange devices most widely applied at present and commonly exist in air-conditioning systems in office buildings, hotels, schools, and family villas. An evaporator and a condenser in an air-conditioning unit are mainly in the form of finned tube heat exchangers in which copper tubes are sleeved with aluminum fins. At present, the heat exchange tube generally uses an internal-thread copper tube, and it is proved that the heat exchange coefficient in the tube is several times that of a smooth tube without internal threads.

However, in conventional applications, a heat exchange tube provided with threads/teeth on its inner wall is adopted merely in an outdoor air-conditioning unit of an air-conditioning system to improve the heat exchange efficiency between a refrigerant and water or air, while an indoor terminal product of the air-conditioning system, such as a refrigerating medium-to-air heat exchanger in a fan coil tube, generally adopts a heat exchange tube with a smooth inner wall. The heat-exchange raw material consumption per unit area is large, the manufacturing costs are high, and the heat exchange is insufficient and inefficient; therefore, it is difficult to optimize the energy consumption of the terminal product of the air-conditioning system.

Therefore, it is in urgent need to find a heat exchange tube for a terminal product of an air-conditioning system that can save energy and reduce emission on the premise of guaranteeing the heat exchange efficiency.

### Summary of the Invention

In view of the above, according to a first aspect of the present invention, a heat exchange tube for a terminal product of an air-conditioning system is provided, thus effectively solving the above problems in the prior art and problems in other aspects. In the heat exchange tube for a terminal product of an air-conditioning system according to the present invention, air and a refrigerating medium perform heat exchange through the heat exchange tube, and protrusions are disposed on an inner wall of the heat exchange tube.

In an implementation manner of the heat exchange tube for a terminal product of an air-conditioning system according to the present invention, the protrusions are each disposed to be a tooth part with a triangular or trapezoidal section, and the height H of the tooth part and the diameter D of the heat exchange tube meet a relationship of 0.005*D≤H≤0.035*D.

In another implementation manner of the heat exchange tube for a terminal product of an air-conditioning system according to the present invention, the tooth parts are distributed on the inner wall along a length direction of the heat exchange tube.

In still another implementation manner of the heat exchange tube for a terminal product of an air-conditioning system according to the present invention, the tooth parts are distributed on the inner wall equidistantly along the length direction of the heat exchange tube.

In yet another implementation manner of the heat exchange tube for a terminal product of an air-conditioning system according to the present invention, the tooth parts are distributed on the inner wall along an axial direction of the heat exchange tube.

In a further implementation manner of the heat exchange tube for a terminal product of an air-conditioning system according to the present invention, the tooth parts are distributed on the inner wall spirally along the axial direction of the heat exchange tube.

In still another implementation manner of the heat exchange tube for a terminal product of an air-conditioning system according to the present invention, the tooth parts are disposed on the entire inner wall.

In a further implementation manner of the heat exchange tube for a terminal product of an air-conditioning system according to the present invention, the height H of the tooth part and the tooth pitch dN of the tooth part meet a relationship of H≤dN≤3H.

In another implementation manner of the heat exchange tube for a terminal product of an air-conditioning system according to the present invention, a spiral angle of the tooth part ranges from 0 degrees to 60 degrees.

In still another implementation manner of the heat exchange tube for a terminal product of an air-conditioning system according to the present invention, the tooth parts and the inner wall are integrated.

In addition, according to a second aspect of the present invention, an air-conditioning terminal product including the heat exchange tube is further provided.

In an implementation manner of the air-conditioning terminal product according to the present invention, the air-conditioning terminal product is a fan coil unit or combined air-conditioning unit.

Moreover, according to a third aspect of the present invention, an air-conditioning system is further provided. The air-conditioning system includes the air-conditioning terminal product according to the foregoing description, a cooling tower, a water chilling unit, and a pumping apparatus that are connected by pipelines.

In addition, according to the fourth aspect of the present invention, a method of manufacturing a heat exchange tube for a terminal product of an air-conditioning system is provided. Protruded tooth parts are formed on an inner wall of the heat exchange tube, and the tooth parts are distributed on the inner wall spirally in a length direction and/or an axial direction of the heat exchange tube.

In an implementation manner of the method according to the present invention, the tooth parts and the inner wall are integrated.

The technical solutions provided in the present invention achieve the following beneficial effects: compared with the prior art, using the heat exchange tube for a terminal product of an air-conditioning system according to the present invention not only can reduce the raw material consumption per unit area, but also can significantly improve the heat exchange area and heat exchange efficiency of the heat exchange tube. Further, the energy consumption of the whole air-conditioning system is reduced effectively.

### Brief Description of the Drawings

The technical solutions of the present invention will be described in further detail below with reference to accompanying drawings and embodiments, wherein:
FIG. 1 shows a three-dimensional local sectional view of an embodiment of a heat exchange tube for a terminal product of an air-conditioning system according to the present invention;
FIG. 2 shows a local sectional view of the heat exchange tube for a terminal product of an air-conditioning system of FIG. 1;
FIG. 3 shows a local sectional view of the heat exchange tube for a terminal product of an air-conditioning system of FIG. 1 in an axial direction; and
FIG. 4 shows a schematic view of an air-conditioning system including the heat exchange tube for a terminal product of an air-conditioning system of FIG. 1.

### Detailed Description

An embodiment of the present invention will be described in detail below with reference to the accompanying drawings. It should be noted that orientation terms that are mentioned or may be mentioned in this specification, such as up, down, left, right, front, back, inner side, outer side, top, and bottom, are defined relative to constructions shown in each accompanying drawing, and they are relative concepts and may thus be changed correspondingly according to their different positions and different use states. Therefore, these or other orientation terms should not be construed as limitative terms.

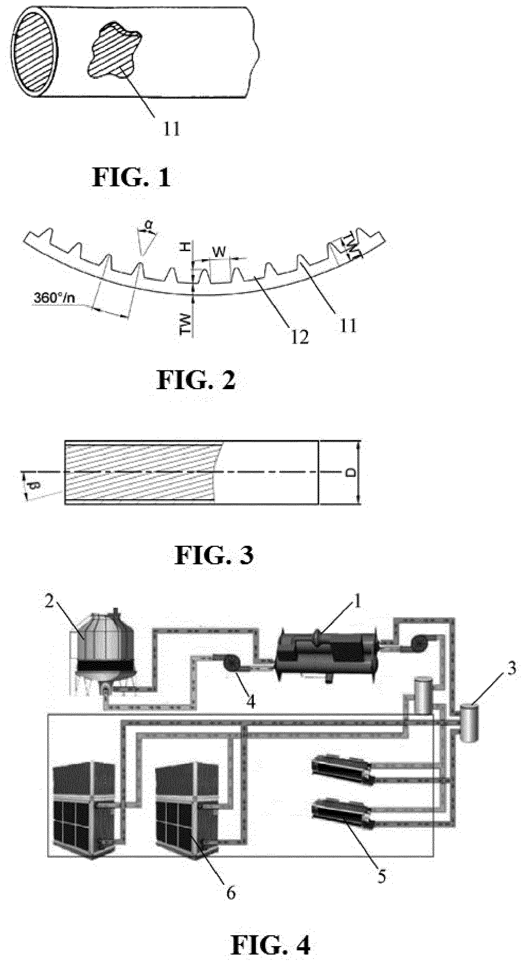

As shown in FIG. 1, a structure of an embodiment of a heat exchange tube for a terminal product of an air-conditioning system according to the present invention is schematically shown. It can be clearly seen with reference to FIG. 1 and FIG. 2 that protrusions for increasing the heat transfer area of the heat exchange tube are disposed on an inner wall 12 of the heat exchange tube, so as to enhance the heat exchange effect between air outside the tube and a refrigerating medium inside the tube in the air-conditioning terminal product. The heat exchange tube for a terminal product of an air-conditioning system according to the present invention refers to a tube for indoor air and in-tube refrigerating medium (which is cooling water in most cases, and can also use a water solution of an organic compound such as glycol or glycerol) to perform heat exchange, but is not limited to the tube referred to in the context.

In a preferred embodiment of the heat exchange tube for a terminal product of an air-conditioning system according to the present invention, the protrusion can be disposed to be a tooth part 11 (as shown in FIG. 2) with a triangular section, and the height H of the tooth part 11 and the diameter D (outer diameter) of the heat exchange tube meet a relationship of 0.005*D≤H≤0.035*D. In order to further optimize the heat exchange effect, the tooth part 11 can be designed to be distributed on the inner wall 12, preferably equidistantly, along a length direction of the heat exchange tube; or the tooth part 11 is distributed on the inner wall 12, preferably spirally, along an axial direction of the heat exchange tube. It can be conceived that, in order to maximize the heat exchange effect of the whole heat exchange tube, the tooth part 11 can be deployed on the entire inner wall 12 of the heat exchange tube. Definitely, it can be understood by those skilled in the ark that the size, shape, density, and the like of the shown tooth parts 11 of the heat exchange tube, e.g., parameters such as the width W of a tooth bottom where the tooth part 11 is connected to the inner tube wall 12, an addendum angle α, and an average included angle 360º/n between addendums, can be adjusted according to actual requirements.

In another optional implementation manner with reference to the above embodiment, the height H of the tooth part 11 and the tooth pitch dN of the tooth part 11 can meet a relationship of H≤dN≤3H. The length of an arc between tooth profiles at the same side of two adjacent teeth, i.e., the tooth pitch in the illustrated embodiment is equal to the sum of the tooth thickness and the tooth space width. In addition, the heat exchange performance of the heat exchange tube is directly related to the heat exchange area and the shape of the internal thread; therefore, a spiral angle β (an included angle between the thread and a longitudinal axis of the tube) of the tooth part 11 is preferably set to range from 0 degrees to 60 degrees, as shown in FIG. 3.

As an example, for ease of manufacturing, the tooth parts 11 of the heat exchange tube can be designed to be integrated with the inner wall 12. Moreover, it can be realized by those skilled in the art that the protrusion on the inner wall 12 of the heat exchange tube can further be designed to be provided with a trapezoidal or rectangular section which is not limited to the triangular section in the above embodiment.

Experimental data shows that as the smooth tubes of the terminal product of the air-conditioning system are changed to enhanced heat transfer tubes, the heat exchange tubes of the present invention can save 5% to 30% materials (for example, the original five rows of smooth tubes can be reduced to three rows of heat exchange tubes with protrusions on the inner wall) compared with the smooth tubes while achieving the same heat exchange effect, thus effectively reducing the weight of a shell-and-tube air-conditioning terminal product and reducing the volume of the heat exchange device. Therefore, it is highly recommended to apply the heat exchange tube proposed in the present invention to an air-conditioning terminal product such as a fan coil unit or combined air-conditioning unit.

In addition, the present invention further provides an air-conditioning system including a heat exchange tube for a terminal product of an air-conditioning system. The air-conditioning system includes a water chilling unit 1, a cooling tower 2, a dispenser 3, a pumping apparatus 4 and the like (as shown in FIG. 4) that are connected by pipelines. Air and a refrigerating medium (e.g., water) perform heat exchange through the heat exchange tube in the air-conditioning terminal product (e.g., a fan coil unit 5 or combined air-conditioning unit 6). It is easily understood by those skilled in the art that improving the efficiency of the air-conditioning terminal product can significantly improve the energy efficiency of the whole air-conditioning system. Therefore, it is recommended here to promote the above air-conditioning terminal product to various types of air-conditioning systems to achieve the objectives of saving energy and reducing consumption.

Moreover, the present invention further provides a method of manufacturing a heat exchange tube for a terminal product of an air-conditioning system. Protruded tooth parts are formed on an inner wall of the heat exchange tube, and the tooth parts are distributed on the inner wall spirally in a length direction and/or an axial direction of the heat exchange tube. Further, the tooth parts can be integrated with the inner wall.

The heat exchange tube for a terminal product of an air-conditioning system, the air-conditioning terminal product, the air-conditioning system, and the method of manufacturing a heat exchange tube for a terminal product of an air-conditioning system according to the present invention are illustrated in detail above through several specific embodiments. These examples are merely used for illustrating the principles of the present invention and implementation manners thereof and are not intended to limit the present invention. Those of ordinary skill in the art can make various variations and improvements without departing from the spirit and scope of the present invention. For example, it is acceptable to adjust parameters (e.g., the bottom wall thickness TW of the heat exchange tube, the total wall thickness TWT, and the like) of the heat exchange tube for a terminal product of an air-conditioning system in some application scenarios or according to actual requirement conditions. Therefore, all equivalent technical solutions should fall into the scope of the present invention and defined by the claims of the present invention.

## Claims

1. A heat exchange tube for a terminal product of an air-conditioning system, through which air and a refrigerating medium performing heat exchange, **characterised in that** protrusions are disposed on an inner wall of the heat exchange tube.

2. The heat exchange tube according to Claim 1, **characterised in that** the protrusions are each disposed to be a tooth part with a triangular or trapezoidal section, and the height H of the tooth part and the diameter D of the heat exchange tube meet a relationship of 0.005*D≤H≤0.035*D.

3. The heat exchange tube according to Claim 2, **characterised in that** the tooth parts are distributed on the inner wall along a length direction of the heat exchange tube.

4. The heat exchange tube according to Claim 3, **characterised in that** the tooth parts are distributed on the inner wall equidistantly along the length direction of the heat exchange tube.

5. The heat exchange tube according to Claim 2, **characterised in that** the tooth parts are distributed on the inner wall along an axial direction of the heat exchange tube.

6. The heat exchange tube according to Claim 5, **characterised in that** the tooth parts are distributed on the inner wall spirally along the axial direction of the heat exchange tube.

7. The heat exchange tube according to any of Claims 2 to 6, **characterised in that** the tooth parts are disposed on the entire inner wall.

8. The heat exchange tube according to any of Claims 2 to 6, **characterised in that** the height H of the tooth part and the tooth pitch dN of the tooth part meet a relationship of H≤dN≤3H.

9. The heat exchange tube according to any of Claims 2 to 6, **characterised in that** a spiral angle of the tooth part ranges from 0 degrees to 60 degrees.

10. The heat exchange tube according to any of Claims 1 to 9, **characterised in that** the tooth parts and the inner wall are integrated.

11. An air-conditioning terminal product, comprising the heat exchange tube according to any of Claims 1 to 10.

12. The air-conditioning terminal product according to Claim 11, the air-conditioning terminal product being a fan coil unit or combined air-conditioning unit.

13. An air-conditioning system, comprising the air-conditioning terminal product according to Claim 11 or 12, a cooling tower, a water chilling unit, and a pumping apparatus that are connected by pipelines.

14. A method of manufacturing a heat exchange tube for a terminal product of an air-conditioning system, **characterised in that** protruded tooth parts are formed on an inner wall of the heat exchange tube, and the tooth parts are distributed on the inner wall spirally in a length direction and/or an axial direction of the heat exchange tube.

15. The method according to Claim 14, **characterised in that** the tooth parts and the inner wall are integrated.
